# FASCICULE DE BREVET EUROPEEN

(11) **EP 0 816 178 B1**
(45) Date de publication et mention de la délivrance du brevet: **22.08.2001**
(21) Numéro de dépôt: 97401500.0
(22) Date de dépôt: 26.06.1997
(51) Int. Cl.: B60R 19/20, B60R 21/00

(54) **Dispositif d'absorption d'énergie pour véhicule automobile**
Energieabsorbierende Vorrichtung für Kraftfahrzeuge
Energy absorption device for motor vehicles

(30) Priorité: 28.06.1996 FR 9608119
(43) Date de publication de la demande: 07.01.1998
(73) Titulaire: ECIA - EQUIPEMENTS ET COMPOSANTS POUR L'INDUSTRIE AUTOMOBILE, F-25400 Audincourt (FR)
(72) Inventeur: Pata, Martial, 25700 Valentigney (FR); Rapy, Pierre-Yves, 25400 Audincourt (FR); Trassaert, Patrick, 25400 Audincourt (FR)
(74) Mandataire: Habasque, Etienne Joel Jean-François

(56) Documents cités:
- DE-A- 3 737 554
- DE-U- 29 606 069
- US-A- 5 033 569
- PATENT ABSTRACTS OF JAPAN vol. 96, no. 9, 30 septembre 1996 & JP 08 132994 A (NIPPON STEEL CORP), 28 mai 1996,
- PATENT ABSTRACTS OF JAPAN vol. 014, no. 407 (M-1019), 4 septembre 1990 & JP 02 155854 A (NIPPON KYODO KIKAKU KK ET AL.), 14 juin 1990,

## Description

La présente invention concerne un véhicule automobile du type indiqué dans le préambule de la revendication 1.

Habituellement, un véhicule automobile est muni d'une extrémité avant sur laquelle est agencé un dispositif passif d'absorption d'énergie comprenant essentiellement un pare-chocs.

En cas de collision, le pare-chocs subit des déformations élastiques et/ou plastiques de manière à absorber l'énergie de la collision.

Les performances d'absorption d'énergie du pare-chocs sont donc limitées à l'aptitude de ce dernier à se déformer.

On connaît également dans l'état de la technique des véhicules du type précité.

JP-A-81 32 994 décrit un tel véhicule sous forme d'un chariot automatique équipé d'un robot manipulateur. Le premier paramètre y est fourni par un détecteur de vitesse de déplacement du véhicule et le second paramètre y est fourni par un télémètre.

Dans d'autres véhicules du type précité, les deux paramètres sont fournis par un dispositif unique, tel qu'un radar, relativement cher, entraînant un surcoût notable du véhicule.

Il est à noter que DE-A-37 37 554 décrit l'utilisation de paramètres provenant d'un dispositif anti-blocage de roues pour commander un dispositif de protection des occupants d'un véhicule comprenant un coussin gonflable de sécurité disposé à l'intérieur du véhicule.

L'invention a pour but de fournir un véhicule automobile du type précité susceptible d'absorber une grande quantité d'énergie en cas de collision du véhicule, ceci avec des moyens simples, efficaces et peu coûteux.

A cet effet, l'invention a pour objet un véhicule tel que défini dans la revendication 1.

D'autres caractéristiques de l'invention sont précisées dans les revendications dépendantes.

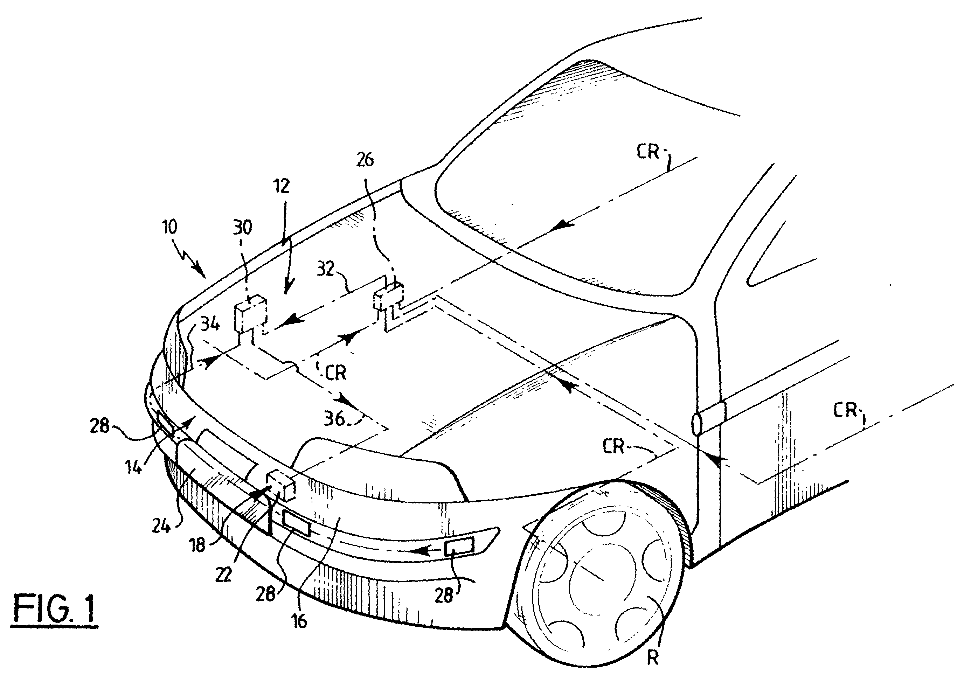

L'invention sera mieux comprise à la lecture de la description qui va suivre donnée uniquement à titre d'exemple et faite en se référant aux dessins annexés dans lesquels les figures 1 1 et 2 sont des vues similaires en perspective de la partie avant d'un véhicule automobile muni d'un dispositif d'absorption d'énergie selon l'invention, les moyens d'absorption d'énergie étant, respectivement, au repos et activés.

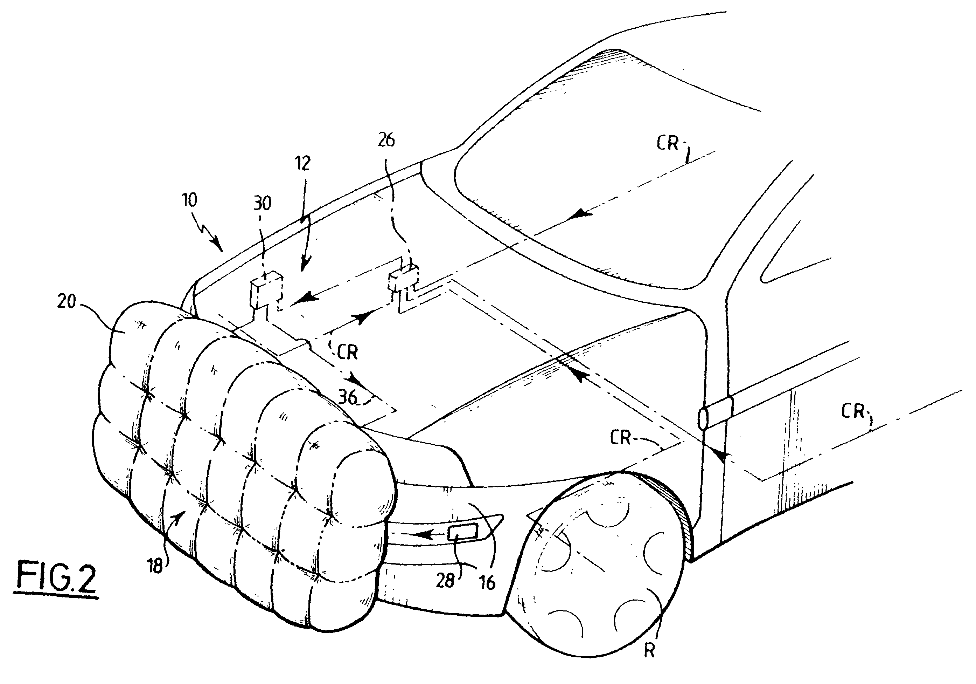

On a représenté sur les figures 1 et 2 la partie avant 10 d'un véhicule automobile dans laquelle est agencé un dispositif 12 d'absorption d'énergie.

On reconnaît sur ces figures une extrémité avant 14 du véhicule portant un pare-chocs 16 formant des moyens passifs d'absorption d'énergie.

Des moyens actifs d'absorption d'énergie 18 sont agencés dans l'extrémité avant 14 du véhicule. Ces moyens 18 sont activés en cas de risque de collision du véhicule avec un obstacle, préalablement à cette collision.

Dans l'exemple décrit, les moyens actifs d'absorption d'énergie comprennent un modulé à sac gonflable logé dans l'extrémité avant 14.

De façon classique, ce module comprend un sac gonflable 20 associé à un générateur de gaz de gonflage de ce sac (non représenté sur les figures) et un détonateur 22 d'activation du générateur de gaz.

Au repos, le sac 20 est logé plié dans un boîtier 24 à couvercle amovible de l'extrémité avant 14. Ce boîtier affleure la surface extérieure du pare-chocs 16.

Le sac 20 est représenté dans une configuration active déployée sur la figure 2.

Le détonateur 22, formant des moyens d'activation des moyens 18 d'absorption d'énergie, est commandé en fonction d'au moins un premier paramètre lié à la cinématique du véhicule et d'au moins un second paramètre lié à la distance du véhicule par rapport à l'obstacle.

De préférence, le premier paramètre est une grandeur liée à la vitesse du véhicule fournie par un dispositif 26 classique anti-blocage de roues du véhicule.

Sur les figures, on a schématisé les conducteurs CR véhiculant, de façon connue en soi, les informations concernant la cinématique des quatre roues R du véhicule vers une unité de calcul classique du dispositif 26 anti-blocage de roues.

Le second paramètre est fourni par un dispositif classique de détection d'obstacle muni d'au moins un détecteur 28 porté par le pare-chocs 16. Dans l'exemple décrit, le pare-chocs porte quatre détecteurs 28.

Sur les figures, on a représenté une unité centrale 30 électronique de calcul et de commande du détonateur 22, munie d'une entrée 32 reliée au dispositif 26 anti-blocage de roues, d'une entrée 34 reliée au détecteur 28 du dispositif de détection d'obstacle, et d'une sortie 36 de commande reliée au détonateur 22.

En cas de risque de collision avec un obstacle, le conducteur freine afin d'éviter ce dernier.

A partir des paramètres liés à la vitesse du véhicule et à la distance de ce véhicule par rapport à l'obstacle qui sont fournis, respectivement, par le dispositif 26 anti-blocage de roues et par le dispositif de détection d'obstacle, l'unité centrale 30 effectue notamment les opérations suivantes :
- calcul de la décélération du véhicule,
- comparaison de cette décélération avec un seuil prédéterminé,
- comparaison de la distance entre le véhicule et l'obstacle avec un seuil prédéterminé,
- détermination du risque de collision, et si nécessaire,
- commande du détonateur 22 qui active le générateur de gaz afin de déployer le sac 20, comme cela est illustré sur la figure 2.

Le module à sac gonflable constitue ainsi des moyens actifs susceptibles d'absorber une grande partie de l'énergie dans le cas où la collision a effectivement lieu.

L'invention ne se limite pas au mode de réalisation illustré sur les figures.

En particulier, le module à sac gonflable peut être remplacé par tout autre moyen actif classique d'absorption d'énergie.

Parmi les avantages de l'invention, on notera les suivants.

Les premier et second paramètres de commande des moyens d'activation 22 sont fournis par des moyens n'entraînant pas de surcoût notable du véhicule. En effet, le dispositif anti-blocage de roues existe déjà sur le véhicule et le dispositif de détection d'obstacle qu'il faut rajouter est simple et peu coûteux,

Les premier et second paramètres sont donc fournis, sans surcoût notable, par deux dispositifs différents, alors que dans l'état de la technique, ces deux paramètres sont fournis par un dispositif unique coûteux, tel qu'un radar.

## Revendications

1. Véhicule automobile du type comprenant une extrémité avant (14), des moyens extérieurs (18) d'absorption d'énergie agencés dans l'extrémité avant (14) et activés en cas de risque de collision du véhicule avec un obstacle, préalablement à cette collision, un dispositif (26) de fourniture d'un premier paramètre lié à la vitesse du véhicule, un dispositif (28) de détection d'obstacle agencé sur l'extrémité avant (14), et des moyens (22) d'activation des moyens d'absorption d'énergie commandés au moins en fonction du premier paramètre et d'au moins un second paramètre, lié à la distance du véhicule par rapport à l'obstacle et fourni par le dispositif de détection d'obstacle, caractérisé en ce que le dispositif de fourniture du premier paramètre est un dispositif (26) anti-blocage de roues du véhicule.

2. Véhicule selon la revendication 1, caractérisé en ce que le dispositif de détection d'obstacle est muni d'au moins un détecteur (28) porté par un pare-chocs (16) de l'extrémité avant (14).

3. Véhicule selon la revendication 1 ou 2, caractérisé en ce qu'il comprend une unité centrale de commande électronique (30) munie d'entrées reliées au dispositif anti-blocage de roues et au dispositif de détection d'obstacle et d'une sortie de commande reliée aux moyens d'activation (22).

4. Véhicule selon l'une quelconque des revendications précédentes, caractérisé en ce que les moyens (18) d'absorption d'énergie comprennent un module à sac gonflable.

## Patentansprüche

1. Kraftfahrzeug des Typs, der versehen ist mit einem vorderen Ende (14), äußeren Energieabsorptionsmitteln (18), die am vorderen Ende (14) angeordnet sind und bei Gefahr einer Kollision des Fahrzeugs mit einem Hindernis vor dieser Kollision aktiviert werden, einer Vorrichtung (26) zum Liefern eines ersten Parameters, der mit der Geschwindigkeit des Fahrzeugs in Beziehung steht, einer Vorrichtung (28) zum Erfassen eines Hindernisses, die am vorderen Ende (14) angeordnet ist, und Mitteln (22) zum Aktivieren der Energieabsorptionsmittel, die wenigstens in Abhängigkeit von dem ersten Parameter und von wenigstens einem zweiten Parameter, der mit dem Abstand des Fahrzeugs von dem Hindernis in Beziehung steht und von der Hinderniserfassungsvorrichtung geliefert wird, gesteuert werden, dadurch gekennzeichnet, daß die Vorrichtung zum Liefern des ersten Parameters eine Rad-Antiblockiervorrichtung (26) des Fahrzeugs ist.

2. Fahrzeug nach Anspruch 1, dadurch gekennzeichnet, daß die Hinderniserfassungsvorrichtung mit wenigstens einem Detektor (28) versehen ist, der von einem Stoßfänger (16) des vorderen Endes (14) getragen wird.

3. Fahrzeug nach Anspruch 1 oder 2, dadurch gekennzeichnet, daß es eine Zentraleinheit (30) zur elektronischen Steuerung umfaßt, die Eingänge, die mit der Rad-Antiblockiervorrichtung bzw. mit der Hindemiserfassungsvorrichtung verbunden sind, und einen Steuerausgang, der mit den Aktivierungsmitteln (22) verbunden ist, umfaßt.

4. Fahrzeug nach einem der vorhergehenden Ansprüche, dadurch gekennzeichnet, daß die Energieabsorptionsmittel (18) ein Airbag-Modul enthalten.

## Claims

1. Motor vehicle of the type comprising a front end (14), external energy absorption means (18) mounted in the front end (14) and activated in the event of a risk of collision of the vehicle with an obstacle, anticipating this collision, a device (26) providing a first parameter linked to the speed of the vehicle, a device (28) for detecting the obstacle and mounted on the front end (14), and means (22) for activating the energy absorption means and controlled at least as a function of the first parameter and of at least one second parameter linked to the distance of the vehicle from the obstacle and provided by the obstacle detection device, characterised in that the device for providing the first parameter is a wheel anti-lock device (26) of the vehicle.

2. Vehicle according to claim 1, characterised in that the obstacle detection device is provided with at least one detector (28) carried by a bumper (16) on the front end (14).

3. Vehicle according to claim 1 or 2, characterised in that it has a central electronic control unit (30) provided with inputs connected to the wheel anti-lock device and to the obstacle detection device and a control. output connected to activating means (22).

4. Vehicle according to any one of the foregoing claims, characterised in that the energy absorption means (18) comprise an inflatable bag module.
